# EUROPÄISCHE PATENTSCHRIFT

(11) **EP 1 972 816 B1**
(45) Veröffentlichungstag und Bekanntmachung des Hinweises auf die Patenterteilung: **13.07.2011**
(21) Anmeldenummer: 08004137.9
(22) Anmeldetag: 06.03.2008
(51) Int. Cl.: F16D 13/75, F16D 13/58

(54) **Selbstnachstellende Reibungskupplung sowie Doppelkupplung mit einer solchen Reibungskupplung**
Self-regulating friction clutch and double clutch with such a friction coupling
Embrayage à friction à repositionnement automatique et embrayage double équipé d'un tel embrayage à friction

(30) Priorität: 22.03.2007 DE 102007013786
(43) Veröffentlichungstag der Anmeldung: 24.09.2008
(73) Patentinhaber: Schaeffler Technologies GmbH & Co. KG, 91074 Herzogenaurach (DE)
(72) Erfinder: Ortmann, Matthias, 77654 Offenburg (DE); Daikeler, René, 77833 Ottersweier-Unzhurst (DE)

(56) Entgegenhaltungen:
- EP-A1- 1 568 905
- WO-A1-99/40335
- FR-A1- 2 775 040

## Beschreibung

Die Erfindung betrifft eine selbstnachstellende Reibungskupplung sowie Doppelkupplung mit einer solchen Reibungskupplung.

Insbesondere bei automatisierten Reibungskupplungen ist eine integrierte Verschleißnachstellung vorteilhaft, mittels der eine Kennlinie, die das übertragbare Kupplungsmoment in Abhängigkeit von der Stellung eines Aktors oder eines Betätigungsgliedes der Kupplung angibt, weitgehend unabhängig von einem Verschleiß der Reibbeläge der Kupplung konstant bleibt. Bekannt sind Nachstelleinrichtungen, bei denen ein Federhebel, mit dem die Kupplung betätigt wird, eine Antriebsfeder trägt, deren äußerer Umfang sich bei einer Verformung des Federhebels ändert. Über einem Schwellwert liegende Umfangsänderungen der Antriebsfeder, wie sie beispielsweise bei einem vorbestimmten Verschleiß der Reibbeläge auftreten, werden für eine Verschleißnachstellung genutzt.

Eine derartige selbstnachstellende Reibungskupplung ist beispielsweise in dem nächstliegenden Stand der Technik, EP 1 568 905, offenbart.

Der Erfindung liegt die Aufgabe zugrunde, eine selbstnachstellende Reibungskupplung mit einfachem Aufbau und geringem Platzbedarf zu schaffen.

Diese Aufgabe wird mit einer selbstnachstellenden Reibungskupplung gemäß dem Anspruch 1 gelöst.

Die Unteransprüche sind auf vorteilhafte Ausführungsformen und Weiterbildungen der erfindungsgemäßen Reibungskupplung gerichtet.

Eine erfindungsgemäße selbstnachstellende Reibungskupplung enthält ein Gehäuse, eine mit diesem drehfest, jedoch axial begrenzt beweglich verbundenen Anpressplatte, mittels der eine Kupplungsscheibe in Reibeingriff mit der Anpressplatte und einer Gegenplatte bringbar ist, einem zwischen dem Gehäuse und der Anpressplatte vorgesehenen, insgesamt ringscheibenförmigen Federhebel mit einem umlaufendem, radial äußeren Umfangsrand, von dem radial einwärts eine Mehrzahl von in Umfangsrichtung beabstandeter Federzungen vorsteht, deren radial innerer Umfangsrand für eine Betätigung der Reibungskupplung axial beweglich ist, eine etwa konzentrisch zum Federhebel angeordnete Antriebsfeder mit einem durch einen radialen Spalt in Umfangsrichtung unterbrochenen Außenrand, von dem radial einwärts Speichen vorstehen, mittels derer die Antriebsfeder an den Federzungen des Federhebels befestigt sind, welche Antriebsfeder und die Hebelfeder derart aufeinander abgestimmt sind, dass sich die Weite des Spaltes im Außenrand der Antriebsfeder bei einer konischen Verformung der Hebelfeder infolge einer axialen Verschiebung von deren innerem Umfangsrand ändert, und eine Verschleißnachstelleinrichtung, die bei einer überschwelligen Verformung des Federhebels und anschließender Rückverformung eine Relativdrehung zwischen dem Federhebel und einem Bauteil herbeiführt, wodurch ein axialer Abstand zwischen dem Federhebel und der Anpressplatte zum Ausgleich von Verschleiß der Kupplungsscheibe verstellbar ist, wobei die Hebelfeder derart geformt ist, dass ihr radial gerichteter Umfangsrand einen axialen Abstand von dem Außenrand der Antriebsfeder hat, und dass ein äußerer Randbereich der Antriebsfeder radial innerhalb eines abgebogenen Bereiches der Hebelfeder auf dieser aufliegt.

Die Verschleißnachstellung kann ein mit einer Umfangsverzahnung ausgebildetes Schneckenrad aufweisen, das durch einen in einer Richtung eine Umfangskraft übertragenden Eingriff mit einer an einem dem Spalt benachbarten Bereich der Antriebsfeder angebrachten Klinke bei einer überschwelligen Verformung der Hebelfeder verdreht wird und das an einer Stirnseite eine Schneckenrille aufweist, die mit einer Verzahnung des Bauteils in Eingriff ist und bei einer Verdrehung des Schneckenrades eine Relativdrehung zwischen der Hebelfeder und dem Bauteil herbeiführt.

Der Umfangsrand des Federhebels bildet beispielsweise einen Kraftrand, längs dessen sich der Federhebel zur Aufnahme von Anpresskräften der Kupplung abstützt, und das Schneckenrad ist derart angeordnet, dass es in axialer Richtung gesehen den Kraftrand überlappt.

Vorteilhafter Weise untergreift der Umfangsrand der Hebelfeder einen mit der Anpressplatte bewegungsübertragend verbundenen Zuganker und ist bei einer Bewegung der Kupplung in axialer Richtung durch eine radiale Ebene hindurch bewegbar, in der der Eingriff zwischen der Schneckenrille und der Verzahnung liegt.

Die Federzungen der Hebelfeder sind vorteilhafter Weise zumindest in einem Abstützbereich, in dem sie sich an einem ringförmigen Gegenbauteil zur Abstützung der Kupplungsbetätigungskräfte abstützen, derart gewölbt, dass sich der Abstützbereich bei einer Verkippung der Federzungen aus der radialen Richtung an eine Gegenfläche des Gegenbauteils anschmiegt.

Vorteilhafterweise ist die Erfindung für eine Doppelkupplung mit zwei axial nebeneinander und gleichachsig angeordneten, von einer Seite her zu betätigen Reibungskupplungen anwendbar, wobei wenigstens die axial äußere Reibungskupplung mit der ihr zugeordneten Betätigungseinrichtung, wie vorstehend erläutert, ausgebildet ist.

Die Erfindung wird im Folgenden anhand schematischer Zeichnungen beispielsweise und mit weiteren Einzelheiten erläutert, wobei zum besseren Verständnis der Erfindung zunächst an sich bekannte Anordnungen erläutert werden.

In den Figuren stellen dar:
- Fig. 1: einen Prinziphalbschnitt durch eine an sich bekannte Reibungskupplung,
- Fig. 2: ein Funktionsprinzip einer an sich bekannten Verschleißnachstellung,
- Fig. 3: eine Aufsicht auf die Anordnung gemäß Fig. 2 zur weiteren Erläuterung des Funktionsprinzips,
- Fig. 4: eine Aufsicht auf Teile eine Reibungskupplung mit einem Schneckenrad zur Verschleißnachstellung,
- Fig. 5: einen Schnitt durch die Anordnung gemäß Fig. 4 in der Ebene VN,
- Fig. 6: eine die Teilansicht der Anordnung gemäß Fig. 4, geschnitten längs der Linie VI/VI,
- Fig. 7: einen Schnitt durch eine erfindungsgemäße Doppelkupplung,
- Fig. 8: einen perspektivische Aussicht auf die Doppelkupplung gemäß Fig. 7,
- Fig. 9: einen Schnitt durch die Doppelkupplung gemäß Fig. 8, längs der Linie IX/IX,
- Fig. 10: einen Schnitt durch die Doppelkupplung gemäß Fig. 8, längs der Linie X/X,
- Fig. 11: eine Detailansicht der Anordnung gemäß Fig. 9,
- Fig. 12: eine Prinzipdarstellung zur Erläuterung der erfindungsgemäßen Ausbildung der Hebelfeder, und
- Fig. 13 und 14: Prinzipdarstellung zur Erläuterung eines weiteren Merkmals der Erfindung.

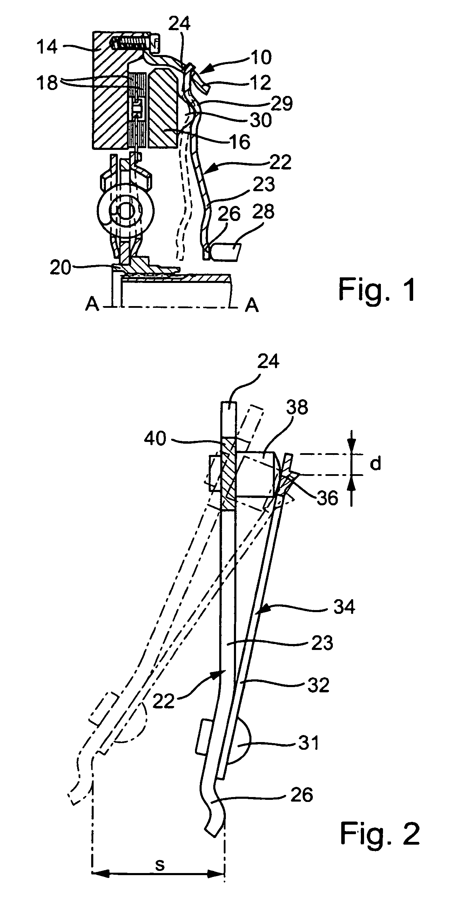

Fig. 1 zeigt, um das grundsätzliche Verständnis der Erfindung zu erleichtern, eine an sich bekannte Reibungskupplung 10 mit der Drehachse A-A.

Die Kupplung enthält einen Deckel bzw. ein Gehäuse 12, der bzw. das starr mit einer Gegendruckplatte 14 verbunden ist, die beispielsweise starr mit einer Schwungscheibe einer Brennkraftmaschine verbunden ist. Weiter ist eine mit dem Gehäuse 12 drehfest, jedoch axial verschiebbar verbundene Anpressplatte 16 vorgesehen, mittels der Reibbeläge 18 gegen die Gegendruckplatte 14 pressbar sind, welche Reibbeläge an einer Kupplungsscheibe 20 angebracht sind, die drehfest mit einer Welle 21, beispielsweise einer Getriebeeingangswelle, verbunden ist.

Zum axialen Bewegen der Anpressplatte 16 ist ein insgesamt ringscheibenförmiger, tellerfederartiger Federhebel 22 vorgesehen, der aus einzelnen in Umfangsrichtung nebeneinander angeordneten, radial einwärts gerichteten und radial außen über einen in Umfangsrichtung geschlossenen ringscheibenförmigen Umfangsrand 24 miteinander verbundenen Federzungen 23 besteht. Im dargestellten Beispiel stützt sich der Federhebel an seinem Umfangsrand 24 an dem Gehäuse 12 ab und wird an seinem inneren Umfangsrand 26 mittels eines Betätigungsglieds 28 axial bewegt. Das Betätigungsglied 28 enthält beispielsweise ein mit der Achse A-A konzentrisches Ringlager, so dass eine lineare Bewegung eines ortsfesten Aktors in eine lineare Bewegung des inneren Umfangsrands 26 des sich drehenden Federhebels 22 umsetzbar ist.

Der Federhebel 22 wirkt über Rampenflächen 24 mit Rampenflächen 30 der Anpressplatte 16 zusammen, wobei die Rampenfläche in Umfangsrichtung mit unterschiedlicher Dicke ausgebildet sind, so dass eine Relativdrehung zwischen der Anpressplatte 16 und dem Federhebel 22 einen Ausgleich von Verschleiß der Reibbeläge 18 oder sonstigem Verschleiß in Elementen der Kupplung ermöglicht. Gepunktet ist die Stellung des Federhebels 22 eingezeichnet, in der die Anpressplatte 16 gegen die Reibbeläge 18 gedrückt ist, d.h. die Kupplung geschlossen oder zugedrückt ist. Die mit ausgezogenen Linien dargestellte Stellung des Federhebels 22 entspricht dem offenen bzw. nicht eingerückten Zustand der Kupplung.

In an sich bekannter Weise kann die Kupplung durch einfache Umkonstruktion als zugedrückte, zugezogene oder aufgedrückte bzw. aufgezogene Kupplung konstruiert sein.

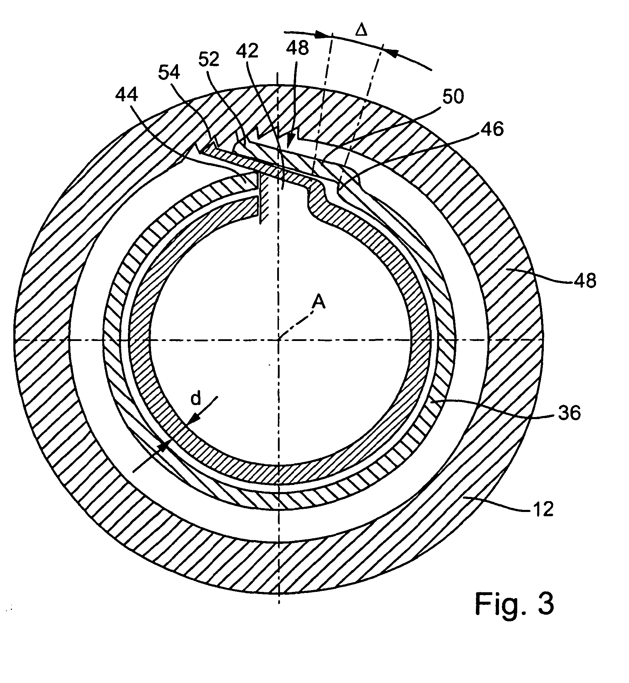

Fig. 2 zeigt in Verbindung mit Fig. 3 das Grundprinzip einer an sich bekannten Verschleißnachstellvorrichtung. Dabei zeigt Fig. 2 einen Halbschnitt durch den Federhebel mit zugehörigen Bauteilen und Fig. 3 eine Aufsicht auf Elemente der Fig. 2 zur Erläuterung der Verschleißnachstellung.

Gemäß Fig. 2 sind die Federzungen 23 des Federhebels 22 beispielsweise durch Nieten 31 mit Speichen 32 einer insgesamt mit 34 bezeichneten Antriebsfeder verbunden, die aus den Speichen und einem äußeren, die Speichen verbindenden, ringscheibenförmigen Außenring 36 zusammengesetzt ist. Die Antriebsfeder 34 stützt sich an der Hebelfeder 22 über Distanzstücke 38 ab, die beispielsweise mit dem Federhebel 22 vernietet sind und zu dem Außenring 36 hin eine ballige Oberfläche aufweisen.

Wenn die Kupplung eingerückt wird, wird der Federhebel 22 an seinem inneren Umfangsrand 26 gemäß Fig. 2 um die Strecke s nach links bewegt und schwenkt dabei um eine am Gehäuse 12 (Fig. 1) ausgebildete Gegenlagerung, an der sich ein mit 40 bezeichneter Kraftrand des äußeren Umfangsrandes 24 abstützt. Die Ringachse dieser Schwenklagerung liegt vorteilhafter Weise in radialer Nähe des Bereiches, in dem die Distanzstücke 38 mit der Hebelfeder 22 verbunden sind.

Wie aus der Fig. 2 unmittelbar ersichtlich, bleibt beim Verschwenken der Hebelfeder 22 der Abstand zwischen den Nieten 30 und dem Kraftrand 40 im Wesentlichen konstant, so dass sich das durch die Hebelfeder 22, die Antriebsfeder 34 und das Distanzstück 38 gebildete Dreieck derart verformt, dass sich die Antriebsfeder 34 unter Abgleiten auf dem Distanzstück 38 mit ihrem Außenring 36 um die Strecke d radial einwärts bewegt. Die Verschwenkung ist jeweils mit einer konischen Verformung der verformten Bauteile verbunden.

Fig. 3 verdeutlicht die Verhältnisse in Aufsicht und zeigt zusätzlich weitere funktionswesentliche Details der Anordnung. Der Außenring 36 ist mit einem radialen Spalt bzw. Schlitz 42 versehen. Ein dem Schlitz 42 benachbartes Ende 44 des Außenrings 36 ist in Umfangsrichtung relativ zu dem Gehäuse 12 (Fig. 1) der Kupplung fixiert. Das andere, an den Schlitz 42 grenzende Ende 46 des Außenrings 36 ist mit einer Klinke 48 versehen, die aus einem den Schlitz 42 radial außen überlagernden Federarm 50 besteht, der an seinem freien Ende wenigstens einen Zahn 52 aufweist, der von dem Federarm 50 radial auswärts in Eingriff in eine Verzahnung 54 gedrängt ist. Die Verzahnung 54 ist am Gehäuse 12 oder an einem eigenen Bauteil, beispielsweise einem Verstellring, ausgebildet. Wie ersichtlich, ist der Zahneingriff derart, dass bei einer Bewegung der Klinke 48 relativ zu der Verzahnung 54 in Gegenuhrzeigerrichtung die Klinke die Verzahnung unter elastischer Verformung des Federarms 50 im Sinne eines Freilaufes überläuft, wohingegen in Gegenrichtung ein Drehmoment übertragender Eingriff zwischen dem Zahn 52 und der Verzahnung 54 besteht.

Wenn der geschlitzte Außenring 36 aus der ausgezogenen Stellung, die der nicht betätigten Stellung der Kupplung bzw. der in Fig. 2 ausgezogenen Stellung entspricht, durch Betätigen der Kupplung um den Radialweg d nach innen gezogen wird (gestrichelt dargestellte Stellung), deckt er aufgrund seiner konstanten Umfangslänge einen größeren Winkelbereich ab, d.h. die Breite des Schlitzes 42 nimmt um das Maß Δ ab. Da das Ende 44 des Außenrings 36 in tangentialer Richtung festgelegt ist, führt dies zu einer Tangentialbewegung bzw. Bewegung in Umfangsrichtung um die Strecke Δ des mit der Klinke 48 versehenen Endes 46 des Außenrings. Dies wird dadurch ermöglicht, dass der Außenring 36 über biegeweiche Speichen 32 (in Fig. 3 nicht dargestellt) mit dem Federhebel 22 verbunden ist und die Berührstellen zwischen dem Außenring 36 und den Distanznieten 38 eine tangentiale Gleitbewegung zulassen. Durch diesen Mechanismus entsteht ein nahezu lineares Verhältnis zwischen Einrückweg bzw. Schwenkwinkel des Federhebels 22 und dem Tangentialweg Δ der Antriebsfeder 34 bzw. von deren Außenring 36. Im Normalfall reicht der Tangentialweg an der Klinke 48 gerade nicht aus, um in den nächsten Zahn der Verzahnung 54 zu springen. Mit zunehmendem Kupplungsverschleiß erhöht sich jedoch die Tangentialbewegung und die Klinke erreicht die nächste Zahnlücke. Beim nachfolgenden Öffnen der Kupplung schiebt die Antriebsfeder bzw. der Außenring 36 die Klinke fest in die Verzahnung zurück, wobei die Klinke an einem Zurückgleiten gehindert ist und die Antriebsfeder somit über die Klinke eine Tangentialkraft auf den Rampenmechanismus 29, 30 (Fig. 1) ausübt, so dass durch eine Relativverdrehung zwischen dem Federhebel und dem Gehäuse eine Nachstellung erzielt wird. Das Verhältnis von d zu Δ lässt sich durch die Konstruktion des Verbandes Federhebel-Antriebsfeder beeinflussen.

Das geschilderte Grundprinzip lässt sich in unterschiedlicher Weise zur Verschleißnachstellung nutzen:

Die Antriebsfeder 34 bewirkt bei Belagverschleiß eine Verschiebung der Klinke 48 relativ zu der Verzahnung 54, die als Umfangsverzahnungssegment ausgebildet ist und über einen Umfangswinkelbereich reicht, der zum Ausgleich des gesamten Verschleißes ausreicht. Welches Bauteil dabei feststeht und welches sich dreht, hängt von der Konstruktion ab. Wenn die Verzahnung feststeht, wird der Federhebel mit Rampen versehen und ist relativ zum Kupplungsgehäuse verdrehbar. Die Antriebsfeder kann sich dann zusammen mit der Hebelfeder verdrehen. Die Rampen des Federhebels verändern die Axialposition der Anpressplatte und gleichen den Verschleiß aus.

Wenn die Antriebsfeder dazu genutzt wird, um einen Verstellring (nicht dargestellt) anzutreiben, wird der Federhebel-Antriebsfeder-Verbund im Kupplungsgehäuse gegen Verdrehen gesichert. Die Verzahnung ist dann Teil des mit Rampen versehenen Verstellrings, wobei die Rampen sowohl zwischen dem Federhebel und dem Verstellring als auch zwischen dem Verstellring und einem mit Anpressplatte drehfest verbundenem Bauteil angeordnet sein können.

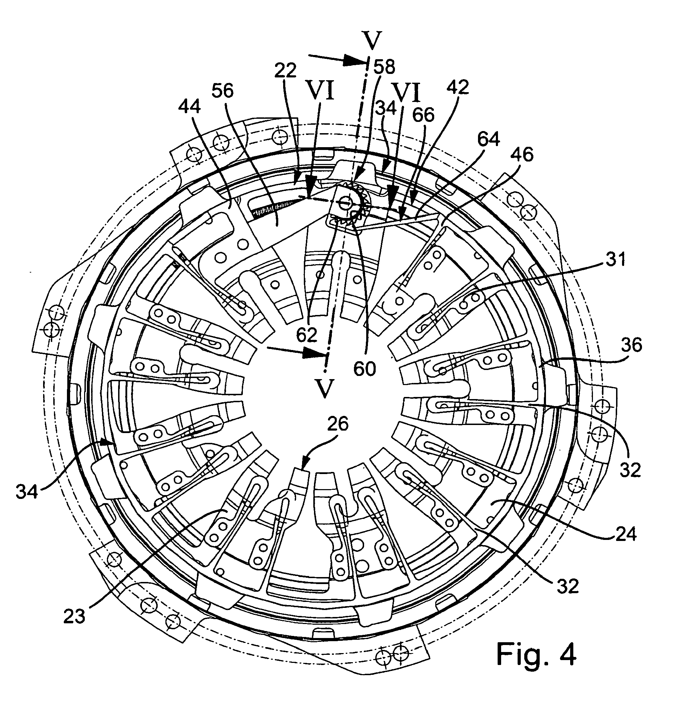

Im Folgenden wird eine abgeänderte Ausführungsform einer Verschteißnachstelleinrichtung, anhand der Fig. 4 bis 6 erläutert:

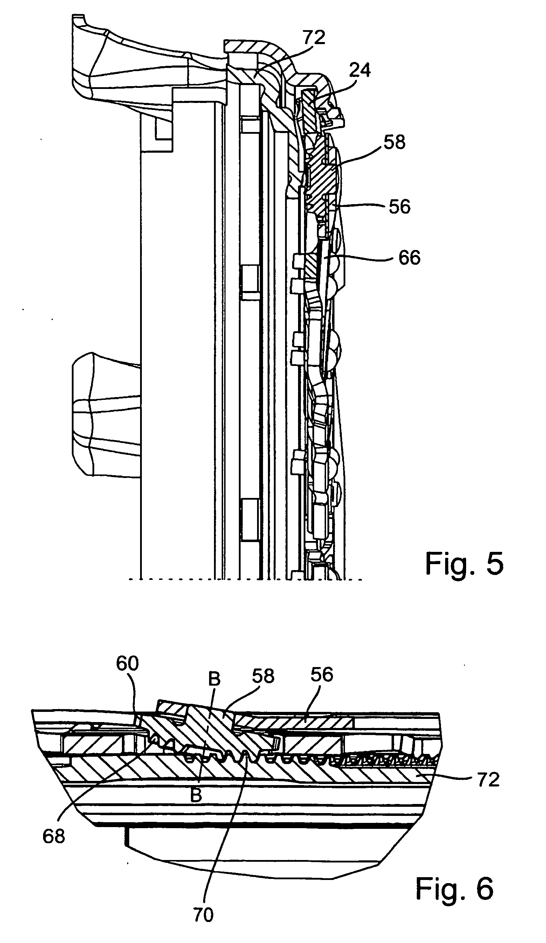

Fig. 4 zeigt eine Aufsicht auf den in Fig. 1 nicht mit den Details der Fig. 4 bis 6 dargestellten Federhebel 22. Fig. 5 zeigt einen Schnitt längs V-V der Fig. 4 und Fig. 6 zeigt einen Schnitt längs der Linie VI-VI der Fig. 4, wobei sich funktional entsprechende Bauteile mit denselben Bezugszeichen belegt sind, wie in Fig. 1 bis 3.

Der Schlitz 42 des Außenrings 36 der Antriebsfeder 34 ist weiter als bei der Ausführungsform gemäß Fig. 3.

Im dargestellten Beispiel sei angenommen, dass sich die Weite des Schlitzes 42 verkleinert, wenn der innere Umfang des Federhebels 22 gemäß Fig. 1 nach rechts bewegt wird. Die Weite ist minimal, wenn das Betätigungsbauteil 28 aus der Stellung gemäß Fig. 1 nach rechts über die der offenen Stellung der Kupplung hinaus gehende Ruhelage verschoben wird bzw. der Federhebel 22 infolge von zuviel Verschleiß der Reibbeläge 18 völlig kraftlos wird.

Mit dem gemäß Fig. 4 links des Schlitzes 42 angeordneten Ende 44 der Antriebsfeder 34 ist ein Blattfederarm 56 beispielsweise durch Nieten starr verbunden, an dessen freiem Ende ein Schneckenrad 58 drehbar gelagert ist. Das Schneckenrad 58 ist an seinem Umfang mit einer Verzahnung 60 ausgebildet, in die eine Mitnehmerverzahnung 62 eingreift, die am Ende eines Federarms 64 ausgebildet ist, der von dem rechts des Schlitzes befindlichen Ende 46 des Außenrings 36 der Antriebsfeder 34 vorsteht. Die Mitnehmerverzahnung 62 enthält mindestens einen Zahn und bildet zusammen mit dem Federarm 64 eine Klinke 66, die in einer Richtung sperrt und in die andere Richtung "frei läuft".

Dazu ist der Federarm 64 derart ausgebildet, dass er die Mitnehmerverzahnung 62 in Eingriff in die Umfangsverzahnung 60 drängt. Die Verzahnungen 62 und 60 sind derart geformt, dass im dargestellten Beispiel gemäß Fig. 4 die Mitnehmerverzahnung 62 das Schneckenrad 58 in Gegenuhrzeigerrichtung dreht, jedoch eine Drehung des Schneckenrades 58 in Uhrzeigerrichtung nicht zwangsläufig erfolgt, sondern sich die Verzahnungen dabei überlaufen können.

Wie aus den Fig. 4 und 5 ersichtlich, ist das Schneckenrad 58 an seiner Unterseite mit einer spiralförmig verlaufenden Schneckenrille 68 versehen. Die Achse B-B, um die das Schneckenrad 58 drehbar im Blattfederarm 56 gelagert ist, ist zur Umfangsrichtung derart geneigt, dass nur einer der beiden bezogen auf die Drehachse B-B in Umfangsrichtung liegenden Bereiche der Schneckenrille 68 in eine Gegenverzahnung 70 eingreift, deren Zähne radial gerichtet sind und die in einem mit dem Gehäuse 12 starr verbundenen Bauteil oder am Gehäuse selbst ausgebildet ist. Im Unterschied zur Ausführungsform 72 gemäß Fig. 1 untergreift der Umfangsrand 24 des Federhebels 22 einen Zuganker 74, der in an sich bekannter Weise eine Grundplatte der Kupplung übergreift und eine gemäß Fig. 5 linksseitig angeordnete Anpressplatte (nicht dargestellt) betätigt.

Die Funktion der Verschleißnachstelleinrichtung ist folgende:
Es sei angenommen, die Weite des Schlitzes 42 bzw. die Länge des äußeren Umfangs der Antriebsfeder 34 nehme bei Bewegung des Federhebels 22 aus der gepunkteten Stellung der Fig. 1 in die durchgezogene Stellung bzw. zur gezielten Nachstellung der Kupplung über die durchgezogen dargestellte Stellung hinaus nach rechts über ein vorbestimmtes Maß hinaus ab. Wenn dieses Maß bzw. dieser Schwellwert das Modul der Verzahnungen 60, 62 übersteigt, überfährt die Mitnehmerverzahnung 62 die Umfangsverzahnung 60 gemäß Fig. 4 nach links, so dass bei einer anschließenden Rückkehr des Federhebels in die Stellung gemäß Fig. 1 das Schneckenrad 58 in Gegenuhrzeigerrichtung verdreht wird. Infolge des Eingriffs der Schneckenrille 68 in die Gegenverzahnung 70, wobei dieser Eingriff durch eine entsprechende Vorspannung des Blattfederarms 56 gewährleistet ist, führt dies zu einer Relativverdrehung zwischen dem Federhebel 22 und dem gehäusefesten Bauteil 72 bzw. dem Gehäuse 12, wodurch sich ein axialer Abstand zwischen dem Umfangsrand 24 und dem Zuganker 74, die sich über nicht dargestellte Rampenflächen aneinander abstützen, im Sinne einer Verschleißnachstellung verändert.

Der Blattfederarm 42, der das Schneckenrad 44 axial in die Gegenverzahnung 54 drängt, überträgt auch das zum Verdrehen notwendige Drehmoment zwischen dem Gehäuse und der Ringscheibenfeder.

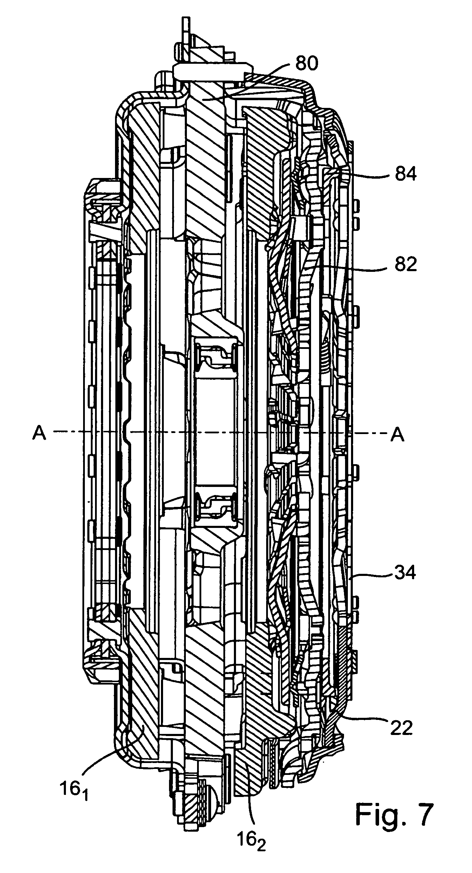

Fig. 7 zeigt im Axialschnitt eine in ihrem grundsätzlichen Aufbau an sich bekannte Doppelkupplung.

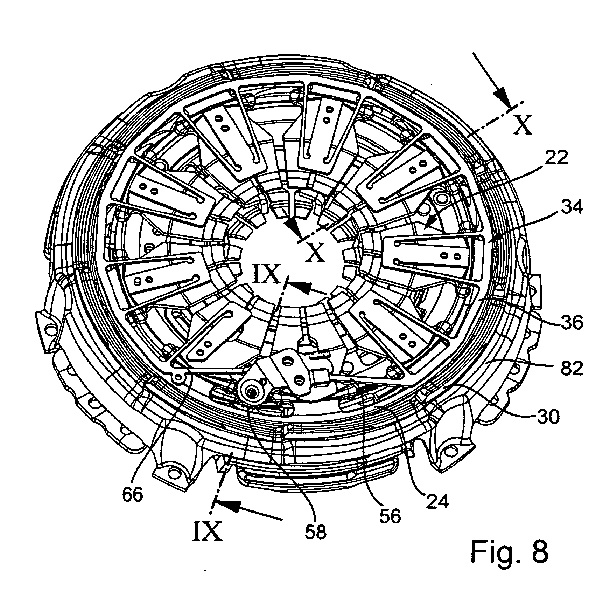

Fig. 8 zeigt eine perspektivische Ansicht von oben der Doppelkupplung gemäß Fig. 7 mit abgenommenem Zuganker.

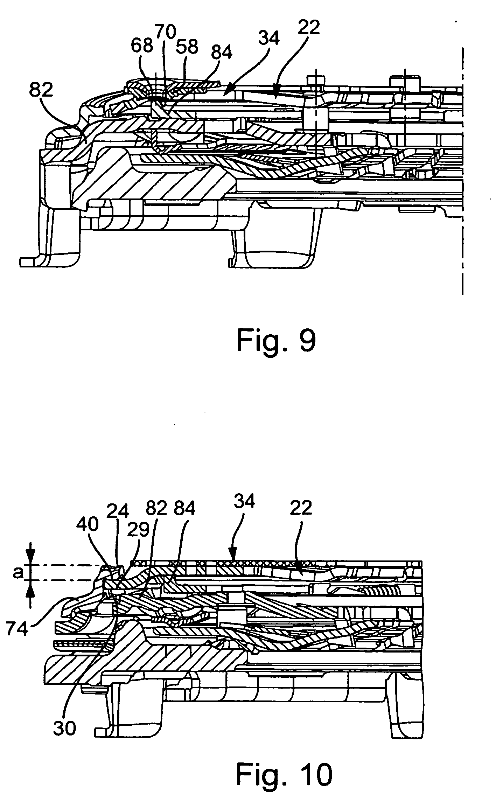

Fig. 9 und 10 zeigen Schnittansichten der Fig. 8 in den Ebenen IX-IX und X-X bei aufgesetztem Zuganker.

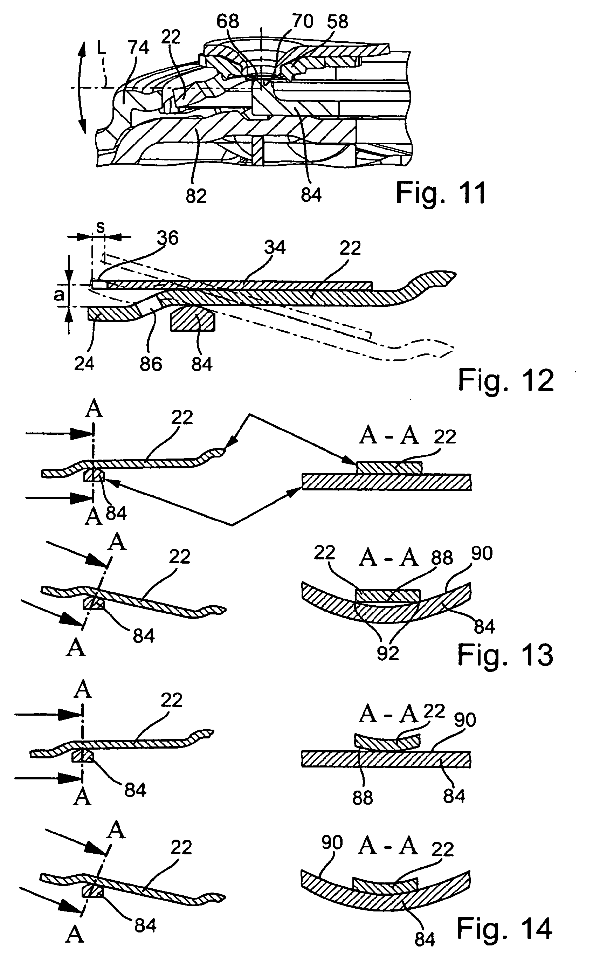

Fig. 11 zeigt eine Detailansicht der Fig. 9.

Für funktionsähnliche Bauteile werden dieselben Bezugszeichen wie bisher verwendet.

Gemäß Fig. 7 weist eine in ihrem grundsätzlichen Aufbau an sich bekannte Doppelkupplung eine Zentralplatte 80 auf, an deren beiden Seiten je eine Kupplung angeordnet ist, die von einer gemäß Fig. 7 rechtzeitig der Zentralplatte 80 angeordneten Betätigungseinrichtung betätigt werden. Die Anpressplatte der linksseitigen Kupplung ist mit 16₁, die der rechtsseitigen Kupplung mit 16₂ bezeichnet. Der zur Betätigung der linksseitigen Kupplung dienende Federhebel ist mit 22 bezeichnet. Die auf dem Federhebel 22 befestigte Antriebsfeder ist mit 34 bezeichnet. Der Federhebel 22 stützt sich auf einem mit einem Teil des Kupplungsgehäuses bildenden Deckel 82, genauer auf einem starr mit dem Deckel 82 verbundenen Stützring 84, ab.

Aufbau und Funktion der Doppelkupplung werden, soweit sie an sich bekannt sind, nicht weiter beschrieben.

Wie insbesondere durch einen Vergleich der Fig. 5 mit den Fig. 7 und 9 bis 11 ersichtlich, ist erfindungsgemäß der Federhebel 22 in seinem äußeren Bereich abgekröpft bzw. doppelt abgebogen, so dass der Umfangsrand 24 in axialer Richtung der Kupplung gesehen relativ zur Oberseite des Federhebels bzw. der Antriebsfeder 34, die auf der Oberseite des Federhebels 22 aufliegt, um ein Maß a (Fig. 10) versetzt ist. Die Kröpfung bzw. doppelte Verformung des Federhebels 22 kann im Bereich der Wurzeln der radial einwärts vorstehenden Federzungen 23 erfolgen oder in einem Bereich des Federhebels, der in Umfangsrichtung durchgehend ausgebildet ist.

Mit der erfindungsgemäßen Ausbildung des Federhebels werden zahlreiche Vorteile erzielt:

Zunächst kann, wie aus Fig. 10 unmittelbar ersichtlich, der Zuganker 74 gegenüber nicht abgekröpften Ausbildungen des Federhebels um das Maß a in axialer Richtung kürzer ausgebildet werden, wodurch Material und Platz gespart wird. Des Weiteren kann das Schneckenrad 58, wie insbesondere aus Fig. 9 in Verbindung mit Fig. 10 ersichtlich, derart an der Antriebsfeder 34 oder dem Federhebel 22 angeordnet werden, dass der Kraftrand 40, längs dessen der Umfangsrand 24 des Federhebels 22 am Zuganker 74 anliegt, unterhalb des Schneckenrades 58 bzw. der an der Stirnseite des Schneckenrades 58 ausgebildeten Schneckenrille 68 angeordnet ist, so dass sich das Schneckenrad 58 bzw. dessen Schneckenrille 68 und der Kraftrand in axialer Richtung gesehen radial überschneiden.

Die Schneckenrille 68 greift in eine an dem Stützring 84 (der das Bauteil gemäß Fig. 1 bildet) ausgebildete Gegenverzahnung 70 ein, so dass sich bei einer Verdrehung des Schneckenrades 58 die Baugruppe aus Federhebel 22 und Antriebsfeder 34 relativ zum Gehäuse der Kupplung verdreht. Dies führt zu einer gegenseitigen Verschiebung zwischen Rampenflächen 29 und 30, die im äußeren Randbereich des Federhebels 22 bzw. an dem gehäusefesten Deckel 82 ausgebildet sind, so dass sich die Ruhelage des Zugankers 74 im Sinne eines Verschleißausgleiches verstellt. Die gehäusefesten Rampenflächen 30 sind in Fig. 8 sichtbar.

Ein weiterer Vorteil, der mit der Anordnung erzielt wird, liegt darin, dass sich bei einer Verformung des Federhebels 22 nur minimale Relativbewegungen zwischen der Schneckenrille 68 und der Gegenverzahnung 70 ergeben. Wie insbesondere aus der Fig. 10 in Verbindung mit Fig. 11 ersichtlich, bewegt sich die Eingriffsstelle zwischen dem Umfangsrand 24 des Federhebels 22 und dem Zuganker 74, also der Kraftrand 40, aus einer Position gemäß Fig. 11 unterhalb des Eingriffs zwischen der Gegenverzahnung 70 und der Schneckenrille 68, die er bei nicht betätigter Kupplung hat, in eine Position oberhalb des Eingriffs zwischen der Schneckenrille 68 und der Gegenverzahnung 70, wie durch den gekrümmten Doppelpfeil in Fig. 11 dargestellt. Die waagerechte Linie L in Fig. 11 entspricht etwa der Ebene, in der der Eingriff zwischen der Schneckenrille 68 und der Gegenverzahnung 70 erfolgt.

Mit der Kröpfung bzw. doppelten Biegung des Federhebels 22 in einem Bereich 86 (Fig. 12), der radial außerhalb der Stelle liegt, an der sich der Federhebel 22 am Gehäuse bzw. dem Kupplungsgehäusefeststützring 84 abstützt, wird weiter folgender, anhand der Fig. 12 erläuterte Vorteil erzielt:

Wie bereits in Fig. 10 dargestellt, stellt das Maß a den axialen Versatz zwischen dem Umfangsrand 24 des Federhebels 22 und dessen Oberseite radial innerhalb des abgekröpften Bereichs 86 dar. Wenn die Antriebsfeder 34 beispielsweise mittels Nieten auf der Oberseite des Federhebels 22 radial innerhalb des Bereiches 86 befestigt ist und insgesamt eben ausgebildet ist, ist auch der Außenring 36 der Antriebsfeder 34 um das Maß a in axialer Richtung vom Umfangsrand 24 entfernt. Wenn der Federhebel 22 aus der in voll ausgezogenen Linien dargestellten Ruhestellung zur Betätigung der Kupplung in eine gestrichelt dargestellte Betriebsstellung verschwenkt wird, bewegt sich der Außenring 36 um das Maß s radial einwärts, was zu einer Veränderung der Umfangslänge des Außenrings 36 führt, die, wie anhand der Fig. 3 und 5 erläutert, zu einer Verschleißnachstellung genutzt werden kann. Durch die erfindungsgemäße abgekröpfte Ausbildung des Federhebels 22 sind somit die anhand der Fig. 2 erläuterten Distanzstücke 38 überflüssig.

Anhand der Fig. 13 und 14 wird ein weiteres vorteilhaftes Merkmal der Erfindung erläutert:

In Fig. 13 zeigen die beiden linken Figurenteile den Federhebel 22 in Ruhestellung und Betriebsstellung, ähnlich wie in Fig. 12. Die jeweils rechten Figurenteile zeigen Schnitte in der Ebene A-A der linken Figurenteile. Wenn der Federhebel 22 im Bereich seiner Auflage auf dem Stützring 84 mit rechteckigem Querschnitt ausgebildet ist, liegt eine ebene Innenseite 88 des Federhebels 22 an einer dann konkaven Gegenfläche 90 des Stützrings 84 an. Die Krümmung bzw. die Konkavität der Gegenfläche 90 ergibt sich daraus, dass der Stützring in Umfangsrichtung gekrümmt ist, so dass eine ebene Auflagefläche nur möglich ist, wenn die Innenseite 88 des Stützrings 84 parallel zur Ebene des Stützrings 84 ist. Die Auflage der ebenen Innenseite 88 auf der konkaven Gegenfläche 90 führt zu Linienberührungen im Bereich der Kanten 92 des Federhebels 22, was zu unzulässig hohen Flächenpressungen und damit Verschleiß führt.

Fig. 14 zeigt der Fig. 13 ähnliche Ansichten bei gekrümmter bzw. konvexer Ausbildung der Innenseite 88 des Federhebels. Dies führt, wie aus dem rechten unteren Teil der Fig. 14 ersichtlich, zu einer gleichmäßigen Auflage der Innenseite 88 auf der Gegenfläche 90 bei aus der Ruhelage verschwenkten Federhebel 22, d.h. bei großen Auflagekräften. Die Lebensdauer der Kupplung wird dadurch vergrößert.

Die geschilderte erfindungsgemäße Ausbildung des Federhebels 22 mit einem gegenüber einem radial inneren Bereich des Federhebels axial versetzten äußeren Umfangsrandbereich kann bei weitgehend allen Arten von Kupplungen mit Verschleißnachstellung über eine Antriebsfeder eingesetzt werden, für Einzelkupplungen, für eine oder beide Kupplungen einer Doppelkupplung, für Verschleißnachstellung lediglich durch einen Eingriff von an der Antriebsfeder 34 ausgebildeten Verzahnungen in Gegenverzahnungen oder eine Verschleißnachstellung mittels Schneckenrädern usw.

### Bezugszeichenliste

- 10: Reibungskupplung
- 12: Gehäuse
- 14: Gegendruckplatte
- 16: Anpressplatte
- 18: Reibbelag
- 20: Kupplungsscheibe
- 22: Federhebel
- 23: Federzunge
- 24: Umfangrand
- 26: innerer Umfangsrand
- 28: Betätigungsglied
- 29: Rampenfläche
- 30: Rampenfläche
- 31: Nieten
- 32: Speichen
- 34: Antriebsfeder
- 36: Außenring
- 38: Distanzstück
- 40: Kraftrand
- 42: Schlitz
- 44: Ende
- 46: Ende
- 48: Klinke
- 50: Federarm
- 52: Zahn
- 54: Verzahnung
- 56: Blattfederarm
- 58: Schneckenrad
- 60: Umfangsverzahnung
- 62: Mitnehmerverzahnung
- 64: Federarm
- 66: Klinke
- 68: Schneckenrille
- 70: Gegenverzahnung
- 72: Bauteil
- 74: Zuganker
- 80: Zentralplatte
- 82: Deckel
- 84: Stützring
- 86: Bereich
- 88: Innenseite
- 90: Gegenfläche
- 92: Kante

## Patentansprüche

1. Selbstnachstellende Reibungskupplung mit einem Gehäuse (12), einer mit diesem drehfest, jedoch axial begrenzt beweglich verbundenen Anpressplatte (16), mittels der eine Kupplungsscheibe (20) in Reibeingriff mit der Anpressplatte und einer Gegenplatte bringbar ist, einem zwischen dem Gehäuse und der Anpressplatte vorgesehenen, insgesamt ringscheibenförmigen Federhebel (22) mit einem umlaufendem. radial äußeren Umfangsrand (24), von dem radial einwärts eine Mehrzahl von in Umfangsrichtung beabstandeten von Federzungen (23) vorsteht, deren radial innerer Umfangsrand (26) für eine Betätigung der Reibungskupplung axial beweglich ist, einer etwa konzentrisch zum Federhebel (22) angeordneten Antriebsfeder (34) mit einem durch einen radialen Schlitz (42) in Umfangsrichtung unterbrochenen Außenring (36), von dem radial einwärts Speichen (32) vorstehen, mittels derer die Antriebsfeder (34) an den Federzungen (23) des Federhebels (22) befestigt sind, welche Antriebsfeder (34) und Federhebel (22) derart aufeinander abgestimmt sind, dass sich die Weite des Schlitzes (42) im Außenring der Antriebsfeder bei einer konischen Verformung des Federhebels (22) infolge einer axialen Verschiebung von deren innerem Umfangsrand (26) ändert, und einer Verschleißnachstelleinrichtung, die bei einer überschwelligen Verformung des Federhebels (22) und anschließender Rückverformung eine Relativdrehung zwischen dem Federhebel (22) und einem Bauteil (84) herbeiführt, wodurch ein axialer Abstand zwischen dem Federhebel (22) und der Anpressplatte (16) zum Ausgleich von Verschleiß der Kupplungsscheibe (18) verstellbar ist, wobei die Federhebel (22) derart geformt ist, dass ihr radial gerichteter Umfangsrand (24) einen axialen Abstand (a) von dem Außenring (36) der Antriebsfeder hat.

2. Selbstnachstellende Reibungskupplung nach Anspruch 1, wobei die Antriebsfeder (34) radial innerhalb eines abgebogenen Bereiches (86) der Hebelfeder (22) auf dieser aufliegt.

3. Selbstnachstellende Reibungskupplung nach Anspruch 1 oder 2, wobei die Verschleißnacheinrichtung ein mit einer Umfangsverzahnung (60) ausgebildetes Schneckenrad (58) aufweist, das durch einen in einer Richtung eine Umfangskraft übertragenden Eingriff mit einer an einem dem Schlitz (42) benachbarten Bereich (44) der Antriebsfeder angebrachten Klinke (48) bei einer überschwelligen Verformung des Federhebels (22) verdreht wird und das an einer Stirnseite eine Schneckenrille (68) aufweist, die mit einer Verzahnung (70) des Bauteils (84) in Eingriff ist und bei einer Verdrehung des Schneckenrades eine Relativdrehung zwischen dem Federhebel und dem Bauteil herbeiführt.

4. Selbstnachstellende Reibungskupplung nach Anspruch 3, wobei der Umfangsrand (24) des Federhebels (22) einen Kraftrand (40) bildet, längs dessen sich der Federhebel zur Aufnahme von Anpresskräften der Kupplung abstützt, und das Schneckenrad (58) radial innerhalb des Kraftrandes derart angeordnet ist, dass es in axialer Richtung gesehen den Kraftrand überlappt.

5. Selbstnachstellende Reibungskupplung nach Anspruch 4, wobei der Umfangsrand (24) der Hebelfeder (22) einen mit der Anpressplatte (16) bewegungsübertragend verbundenen Zuganker (74) untergreift und bei einer Betätigung der Kupplung in axialer Richtung durch eine radiale Ebene hindurch bewegbar ist, in der der Eingriff zwischen der Schneckenrille (68) und der Verzahnung (70) liegt.

6. Selbstnachstellende Reibungskupplung nach einem der Ansprüche 1 bis 5, wobei die Federzungen (23) der Hebelfeder (22) zumindest in einem Abstützbereich, in dem sie sich an einem ringförmigen Gegenbauteil (84) zur Abstützung der Kupplungsbetätigungskräfte abstützen, derart konvex gewölbt sind, dass sich der Abstützbereich bei einer Verkippung der Federzungen aus der radialen Richtung an eine Gegenfläche (90) des Gegenbauteils anschmiegt.

7. Doppelkupplung mit zwei axial nebeneinander und gleichachsig angeordneten, von einer Seite her zu betätigenden Reibungskupplungen, wobei wenigstens die axial äußere Reibungskupplung mit der ihr zugeordneten Betätigungseinrichtung entsprechend einem der Ansprüche 1 bis 6 ausgebildet ist.

## Claims

1. Self-adjusting friction clutch having a housing (12), having a pressure plate (16) which is connected to said housing for conjoint rotation therewith but so as to be axially movable to a limited extent and by means of which a clutch disc (20) can be placed in frictional engagement with the pressure plate and a counterpart plate, having a spring lever (22) which is provided between the housing and the pressure plate and whose overall shape is that of an annular disc and which has an encircling radially outer circumferential edge (24) from which a multiplicity of spring tongues (23) spaced apart in the circumferential direction project radially inwards, the radially inner circumferential edge (26) of which spring tongues is axially movable for an actuation of the friction clutch, having a drive spring (34) which is arranged approximately concentrically with respect to the spring lever (22) and which has an outer ring (36) interrupted in the circumferential direction by a radial slot (42), from which outer ring spokes (32) project radially inwards, by means of which spokes the drive spring (34) is fastened to the spring tongues (23) of the spring lever (22), which drive spring (34) and spring lever (22) are coordinated with one another such that the width of the slot (42) in the outer ring of the drive spring changes in the event of a conical deformation of the spring lever (22) as a result of an axial displacement of the inner circumferential edge (26) thereof, and having a wear adjustment device which, in the event of a deformation of the spring lever (22) beyond a threshold and a subsequent recovery, effects a relative rotation between the spring lever (22) and a component (84), as a result of which an axial spacing between the spring lever (22) and the pressure plate (16) can be adjusted in order to compensate for wear of the clutch disc (18), the spring lever (22) being shaped such that its radially directed circumferential edge (24) is at an axial distance (a) from the outer ring (36) of the drive spring.

2. Self-adjusting friction clutch according to Claim 1, the drive spring (34) bearing against the lever spring (22) radially within a bent region (86) of the lever spring.

3. Self-adjusting friction clutch according to Claim 1 or 2, the wear adjustment device having a worm gear (58), which worm gear is formed with a circumferential toothing (60) and, in the event of a deformation of the spring lever (22) beyond a threshold, is rotated by virtue of being engaged, for a transmission of a circumferential force in one direction, with a pawl (48) attached to a drive spring region (44) adjacent to the slot (42), and which worm gear, on an end side, has a worm groove (68) which engages with a toothing (70) of the component (84) and which, in the event of a rotation of the worm gear, effects a relative rotation between the spring lever and the component.

4. Self-adjusting friction clutch according to Claim 3, the circumferential edge (24) of the spring lever (22) forming a force edge (40) along which the spring lever is supported for the absorption of pressure forces of the clutch, and the worm gear (58) is arranged radially within the force edge so as to overlap the force edge as viewed in the axial direction.

5. Self-adjusting friction clutch according to Claim 4, the circumferential edge (24) of the lever spring (22) engaging under a tension anchor (74) which is connected to the pressure plate (16) for a transmission of movement, and in the event of an actuation of the clutch, said circumferential edge can be moved in the axial direction through a radial plane in which the engagement between the worm groove (68) and the toothing (70) takes place.

6. Self-adjusting friction clutch according to one of Claims 1 to 5, the spring tongues (23) of the lever spring (22), at least in a support region in which they are supported on an annular counterpart component (84) in order to support the clutch actuating forces, being convexly curved such that the support region nestles against a counterpart surface (90) of the counterpart component in the event of a tilting of the spring tongues out of the radial direction.

7. Double clutch having two friction clutches which are arranged axially adjacent to one another and coaxially and which are actuated from one side, at least the axially outer friction clutch with the actuating device assigned thereto being designed according to one of Claims 1 to 6.

## Revendications

1. Embrayage à friction à rajustement automatique comprenant un boîtier (12), un plateau de pression (16) connecté de manière solidaire en rotation à celui-ci, mais avec un mouvement axial limité, au moyen duquel un disque d'embrayage (20) peut être amené en engagement par friction avec le plateau de pression et un plateau conjugué, un levier à ressort (22) généralement en forme de disque annulaire, prévu entre le boîtier et le plateau de pression, avec un bord circonférentiel périphérique (24) radialement extérieur, duquel fait saillie radialement vers l'intérieur une pluralité de langues de ressort (23) espacées dans la direction périphérique, dont le bord périphérique (26) radialement intérieur est déplaçable axialement en une d'un actionnement de l'embrayage à friction, un ressort d'entraînement (34) disposé approximativement concentriquement au levier à ressort (22) avec une bague extérieure (36) interrompue par une fente radiale (42) dans la direction périphérique, de laquelle font saillie radialement vers l'intérieur des rayons (32) au moyen desquels le ressort d'entraînement (34) est fixé sur les langues de ressort (23) du levier à ressort (22), lequel ressort d'entraînement (34) et levier à ressort (22) sont adaptés l'un à l'autre de telle sorte que la largeur de la fente (42) dans la bague extérieure du ressort d'entraînement varie dans le cas d'une déformation conique du levier à ressort (22) suite à un déplacement axial de son bord périphérique interne (26), et un dispositif de rajustement d'usure qui, dans le cas d'une déformation excessive du levier à ressort (22) et d'une déformation en retour subséquente, provoque une rotation relative entre le levier à ressort (22) et un composant (84), de sorte qu'une distance axiale entre le levier à ressort (22) et le plateau de pression (16) puisse être ajustée pour compenser l'usure du disque d'embrayage (18), le levier à ressort (22) étant formé de telle sorte que son bord périphérique orienté radialement (24) soit à une distance axiale (a) de la bague extérieure (36) du ressort d'entraînement.

2. Embrayage à friction à rajustement automatique selon la revendication 1, dans lequel le ressort d'entraînement (34) repose radialement à l'intérieur d'une région recourbée (86) du levier à ressort (22) sur ce dernier.

3. Embrayage à friction à rajustement automatique selon la revendication 1 ou 2, dans lequel le dispositif de rajustement d'usure présente une roue à denture hélicoïdale (58) réalisée avec une denture périphérique (60), qui est tournée par un engagement de transfert de force périphérique dans une direction avec un cliquet (48) monté sur une région (44) du ressort d'entraînement adjacente à la fente (42), dans le cas d'une déformation excessive du levier à ressort (22), et qui présente sur un côté frontal une gorge hélicoïdale (68), qui est en prise avec une denture (70) du composant (84) et qui, dans le cas d'une rotation de la roue à denture hélicoïdale, provoque une rotation relative entre le levier à ressort et le composant.

4. Embrayage à friction à rajustement automatique selon la revendication 3, dans lequel le bord périphérique (24) du levier à ressort (22) forme un bord de force (40) le long duquel s'appuie le levier à ressort pour recevoir les forces de pression de l'embrayage, et la roue à denture hélicoïdale (58) est disposée radialement à l'intérieur du bord de force de telle sorte qu'elle chevauche le bord de force, vu dans la direction axiale.

5. Embrayage à friction à rajustement automatique selon la revendication 4, dans lequel le bord périphérique (24) du levier à ressort (22) vient en prise par le dessous avec un tirant (74) connecté au plateau de pression (16) en transmettant le mouvement, et dans le cas d'un actionnement de l'embrayage, peut être déplacé dans la direction axiale à travers un plan radial dans lequel se trouve l'engagement entre la gorge hélicoïdale (68) et la denture (70).

6. Embrayage à friction à rajustement automatique selon l'une quelconque des revendications 1 à 5, dans lequel les langues de ressort (23) du levier à ressort (22) sont courbées suivant une forme convexe au moins dans une région d'appui dans laquelle elles s'appuient sur un composant conjugué de forme annulaire (84) pour supporter les forces d'actionnement de l'embrayage, de telle sorte que la région d'appui, dans le cas d'un basculement des langues de ressort hors de la direction radiale, épouse une surface conjuguée (90) du composant conjugué.

7. Double embrayage avec deux embrayages à friction disposés l'un à côté de l'autre et sur le même axe, devant être actionnés d'un côté, au moins l'embrayage à friction axialement extérieur étant réalisé avec le dispositif d'actionnement qui lui est associé selon l'une quelconque des revendications 1 à 6.
